# EUROPEAN PATENT APPLICATION

(11) **EP 4 254 635 A1**
(43) Date of publication of application: **04.10.2023**
(21) Application number: 21898209.8
(22) Date of filing: 30.11.2021
(51) Int. Cl.: H01M 50/409

(54) **INSPECTION METHOD AND PRODUCTION METHOD FOR SEPARATOR FOR LITHIUM ION SECONDARY BATTERIES**

(30) Priority: 30.11.2020 JP 2020199061
(71) Applicant: Zeon Corporation, Tokyo 100-8246 (JP)
(72) Inventor: YAMADA, Tomofumi, Tokyo 100-8246 (JP)
(74) Representative: Maiwald GmbH
(86) International application number: PCT/JP2021/043980
(87) International publication number: WO 2022/114238

(57) **Abstract**

It could be helpful to provide an inspection method that can determine the formed amount of an adhesive region on a separator substrate with high accuracy in producing a lithium ion secondary battery separator. The presently disclosed method of inspecting a lithium ion secondary battery separator is a method of inspecting a lithium ion secondary battery separator, in which an adhesive region made of a binder is formed on at least one surface of a separator substrate. This inspection method includes determining a formed amount of the adhesive region by spectroscopic ellipsometry that measures a change in deflection state of reflected light by irradiating the surface of the separator substrate on which the adhesive region is formed with linearly polarized light of white light as incident light.

## Description

### TECHNICAL FIELD

The present disclosure relates to a method of inspecting a lithium ion secondary battery separator, in which an adhesive region is formed on the surface of a separator substrate, and a method producing the lithium ion secondary battery separator using this inspection method.

### BACKGROUND

Lithium ion secondary batteries have characteristics such as compact size, light weight, high energy-density, and the ability to be repeatedly charged and discharged, and are used in a wide variety of applications. The lithium ion secondary battery typically includes a plurality of electrodes (positive electrode, negative electrode) and a separator that isolates the electrodes from one another and prevents short-circuiting between the electrodes.

In a production process of the lithium ion secondary battery, there are cases in which the electrodes and the separator that have not yet been immersed in electrolyte solution are adhered to obtain a laminate and are then cut to a desired size and/or stacked, folded, or wound up, as necessary. Misalignment or the like of the adhered electrodes and separator may occur during this cutting, stacking, folding, or winding, leading to problems such as the occurrence of faults and reduction of productivity.

In recent years, techniques have been examined for forming an adhesive region made of a binder on the surface of a separator substrate and bonding the obtained separator to the electrodes. For example, in Patent Literature (PTL) 1, a separator having an adhesive region made of a thermoplastic polymer on the surface is produced by coating the separator with a paint containing a predetermined thermoplastic polymer and drying the coating film to remove solvents in the coating liquid.

### CITATION LIST

### Patent Literature

PTL 1: JP 2018-170281 A

### SUMMARY

### (Technical Problem)

In producing the separator in which the adhesive region is formed by applying the binder to the surface of the separator substrate, it is conventionally required an inspection method to confirm that a desired amount of adhesive region has been formed on a separator substrate surface at the side on which the adhesive region has been formed (hereinafter, referred to as a "formation surface" or an "adhesive region formation surface"). As such inspection method, a method to detect functional groups such as carbonyl groups contained in the binder by infrared spectroscopy is conceivable.

However, as a result of investigation, the inventor found that the inspection method by infrared spectroscopy causes large difference between the actual formed amount and the formed amount determined by inspection when the amount of the functional groups such as carbonyl groups contained in the binder is small or when the formed amount of the adhesive region is small.

It could be helpful to provide an inspection method that can determine the formed amount of an adhesive region on a separator substrate with high accuracy in producing a lithium ion secondary battery separator and a method of producing the lithium ion secondary battery separator using this inspection method.

### (Solution to Problem)

The inventor conducted diligent investigation with the aim of solving the problems set forth above. The inventor made a new discovery that the inspection using spectroscopic ellipsometry can determine the formed amount of the adhesive region on the separator substrate with high accuracy and completed the present disclosure.

Specifically, the present disclosure aims to advantageously solve the problems set forth above, and a presently disclosed method of inspecting a lithium ion secondary battery separator is a method of inspecting a lithium ion secondary battery separator, in which an adhesive region made of a binder is formed on at least one surface of a separator substrate, and the method includes determining a formed amount of the adhesive region by spectroscopic ellipsometry that measures a change in deflection state of reflected light by irradiating the surface of the separator substrate on which the adhesive region is formed with linearly polarized light of white light as incident light. The use of the above spectroscopic ellipsometry can determine the formed amount of the adhesive region on the separator substrate with high accuracy.

In the presently disclosed method of inspecting a lithium ion secondary battery separator, the adhesive region can be made of a particulate binder with a mean diameter of 0.1 µm or more and 5 µm or less. If the adhesive region is made up of a fine particulate binder having the above mean diameter, battery characteristics (output characteristics, cycle characteristics, etc.) of the lithium ion secondary battery can be improved, while achieving good adhesion of the separator and electrodes. The presently disclosed inspection method also can determine the formed amount of the adhesive region with sufficiently high accuracy even when the adhesive region is made up of the fine particulate binder having the above mean diameter.

In the present disclosure, the mean diameter of the particulate binder can be calculated as the mean value of the respective greatest diameters (greatest length among lengths of line segments linking two points on the outer edge of one particulate binder) of any 1000 particulate binders in an image in plan view of the adhesive region formation surface, which are obtained by observation using a scanning electron microscope (SEM).

Moreover, in the presently disclosed method of inspecting a lithium ion secondary battery separator, the adhesive region can be made up of one or a plurality of regions with an island shape in plan view. If the adhesive region is made up of one or a plurality of regions with an island shape in plan view, the formed amount of the adhesive region can be reduced to improve the battery characteristics of the lithium ion secondary battery, while achieving good adhesion of the separator and electrodes. The presently disclosed inspection method also can determine the formed amount of the adhesive region with sufficiently high accuracy even when the adhesive region is made up of one or a plurality of regions with an island shape in plan view.

In the presently disclosed method of inspecting a lithium ion secondary battery separator, the adhesive region can have a formed amount of 0.02 g/m² or more and 0.6 g/m² or less. If the formed amount of the adhesive region, that is, a mass (g) of the adhesive region per unit area (m²) on the adhesive region formation surface, is within the above range, the formed amount of the adhesive region can be reduced to improve the battery characteristics of the lithium ion secondary battery, while achieving good adhesion of the separator and electrodes. The presently disclosed inspection method also can determine the formed amount of the adhesive region with sufficiently high accuracy even when the formed amount of the adhesive region is within the above range and the mass per unit area is small.

In the presently disclosed method of inspecting a lithium ion secondary battery separator, the white light can be light emitted by a xenon lamp. The use of the xenon lamp as a white light source can determine the formed amount of the adhesive region with sufficiently high accuracy.

In the presently disclosed method of inspecting a lithium ion secondary battery separator, measurement by the spectroscopic ellipsometry can be performed, while conveying the lithium ion secondary battery separator with a long length in the longitudinal direction.

Moreover, the present disclosure aims to advantageously solve the problems set forth above, and a presently disclosed method of producing a lithium ion secondary battery separator includes coating at least one surface of the separator substrate with a coating liquid containing the binder and a solvent; drying the coating liquid on the coated separator substrate to form the adhesive region; and determining a formed amount of the adhesive region using any one of the above methods of inspecting a lithium ion secondary battery separator. The presently disclosed method of producing a lithium ion secondary battery separator, which undergoes the above inspection by spectroscopic ellipsometry, has an advantage to enable adjustment of various production conditions (solid content concentration and coating conditions of the coating liquid, etc.) based on inspection results to bring the formed amount of the adhesive region closer to a desired amount.

In the presently disclosed method of producing a lithium ion secondary battery separator, the coating liquid can further contain a dispersing auxiliary agent. The used of the coating liquid containing a dispersing auxiliary agent can uniformly coat the separator substrate surface with this coating liquid at high speed.

Moreover, in the presently disclosed method of producing a lithium ion secondary battery separator, the coating liquid can have a solid content concentration of 1 mass% or more and 40 mass% or less. The use of the coating liquid with a solid content concentration within the above range can enhance the handleability and the drying efficiency of this coating liquid.

In the presently disclosed method of producing a lithium ion secondary battery separator, the coating liquid can have a coating speed of 2 m/min or more and 300 m/min or less. Even if the coating speed is within the above range and high speed, the presently disclosed method of producing a lithium ion secondary battery separator uses the above inspection method, which can determine the formed amount of the adhesive region with sufficiently high accuracy, while continuously producing lithium ion secondary battery separators in an efficient way.

### (Advantageous Effect)

According to the present disclosure, it is possible to provide an inspection method that can determine the formed amount of an adhesive region on a separator substrate with high accuracy in producing a lithium ion secondary battery separator and a method of producing the lithium ion secondary battery separator using this inspection method.

### BRIEF DESCRIPTION OF THE DRAWINGS

In the accompanying drawing:

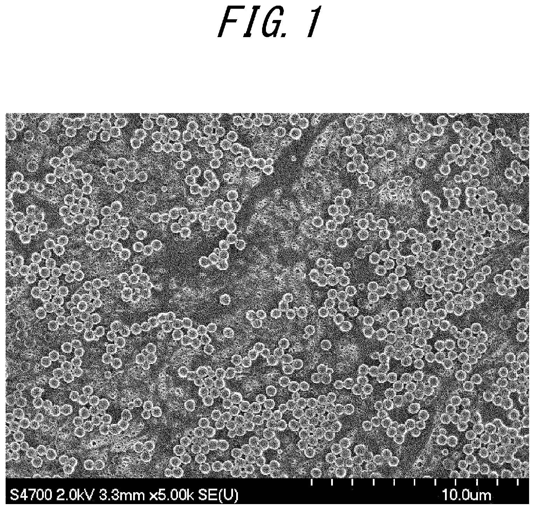

FIG. 1 is a SEM image of an adhesive region formation surface of a separator substrate.

### DETAILED DESCRIPTION

The following provides a detailed description of embodiments of the present disclosure.

A presently disclosed inspection method is a method of inspecting a lithium ion secondary battery separator having a separator substrate and an adhesive region formed on the surface of the separator substrate. Further, a presently disclosed production method is a method of producing a lithium ion secondary battery separator through inspection by the presently disclosed inspection method.

### (Method of inspecting lithium ion secondary battery separator)

The presently disclosed inspection method determines a formed amount of the adhesive region present on the surface of the separator substrate by spectroscopic ellipsometry.

The presently disclosed inspection method uses spectroscopic ellipsometry, thus being able to determine the formed amount of the adhesive region on the separator substrate surface with high accuracy, compared with conventional inspection methods using infrared spectroscopy or the like.

### <Separator substrate>

Examples of the separator substrate can include, but are not specifically limited to, known separator substrates used in the field of lithium ion secondary batteries. As such separator substrate, a porous substrate having fine pores is used, and examples of the porous substrate include microporous membranes or non-woven fabrics containing, for example, a polyolefin resin such as polyethylene or polypropylene or an aromatic polyamide resin.

The separator substrate may include a heat resistance layer on at least one surface. That is, as the separator substrate, a substrate made of only the above porous substrate may be used, or a substrate made by including the heat resistance layer on one surface or both surfaces of the above porous substrate may be used.

Examples of the heat resistance layer can include, but are not specifically limited to, known heat resistance layers used in the field of lithium ion secondary batteries (e.g., a layer made of non-conductive particles such as alumina bonded by a binder for heat resistance layer).

### <Adhesive region>

The adhesive region formed on the surface of the above separator substrate is a region containing at least a binder. The adhesive region may contain components other than the binder. Examples of the components other than the binder contained in the adhesive region include, but are not specifically limited to, a dispersing auxiliary agent contained in a coating liquid used for forming the adhesive region.

### <<Binder>>

Examples of the binder can include, but are not specifically limited to, any binders used in the field of lithium ion secondary batteries, as long as the binder has binding ability and do not inhibit battery reaction. In particular, the binder is preferably a binder made of a polymer. The binder that forms the adhesive region may be just one type of binder or two or more types of binders.

Examples of the polymer that can be used as the binder include, but are not specifically limited to, fluoropolymers such as polyvinylidene fluoride and polyvinylidene fluoride-hexafluoropropylene (PVdF-HFP) copolymer; conjugated diene polymers such as styrene-butadiene copolymer (SBR) and acrylonitrile-butadiene copolymer (NBR); hydrogenated products of conjugated diene polymers; polymers including a (meth)acrylic acid alkyl ester monomer unit (acrylic polymers); and polyvinyl alcohol polymers such as polyvinyl alcohol (PVA).

Note that in the present disclosure, "(meth)acrylic acid" indicates "acrylic acid" and/or "methacrylic acid".

The form of the binder made of a polymer is not specifically limited and may be a particulate form, a non-particulate form, or a combination of a particulate form and a non-particulate form.

When the binder made of a polymer is a particulate binder, the particulate binder may be monophase structure particles formed from a single polymer or may be heterophase structure particles formed through physical or chemical bonding of two or more different polymers. Specific examples of the heterophase structure include a core-shell structure in which a central portion (core portion) and an outer shell portion (shell portion) of spherical particles are formed from different polymers; and a side-by-side structure in which two or more polymers are adjacent to each other. Note that the term "core-shell structure" as used in the present disclosure is inclusive of a structure in which a shell portion completely covers the outer surface of a core portion and also a structure in which a shell portion partially covers the outer surface of a core portion. In terms of external appearance, even in a situation in which the outer surface of a core portion appears to be completely covered by a shell portion, the shell portion is still considered to be a shell portion that partially covers the outer surface of the core portion so long as pores are formed that pass between inside and outside of the shell portion.

In the polymer having a core-shell structure, the glass-transition temperature is, for example, preferably 25°C or more, more preferably 40°C or more, and further preferably 45°C or more, and preferably 105°C or less, more preferably 85°C or less, and further preferably 65°C or less. If the glass-transition temperature of the polymer having a core-shell structure is 25°C or more, good adhesion of the separator and electrodes can be achieved. If the glass-transition temperature of the polymer having a core-shell structure is 105°C or less, the battery characteristics of the lithium ion secondary battery can be improved.

The glass-transition temperature in the present disclosure can be measured by a method described in the EXAMPLES section.

The above polymer having a core-shell structure is not specifically limited, but, for example, a polymer described in WO 2020/040031 A1 may be used.

### <<Properties of adhesive region>>

When the adhesive region contains the particulate binder as the binder, the mean diameter of the particulate binder is preferably 0.1 µm or more, and more preferably 0.5 µm or more, and preferably 5 µm or less. If the adhesive region is made up of a fine particulate binder having the above mean diameter, the battery characteristics of the lithium ion secondary battery can be improved, while achieving good adhesion of the separator and electrodes. In addition, the presently disclosed inspection method can determine the formed amount of the adhesive region with sufficiently high accuracy even when the adhesive region is made up of the fine particulate binder having the above mean diameter.

The adhesive region may be arranged on the whole formation surface of the separator substrate. However, the adhesive region is preferably made up of one or a plurality of regions with an island shape in plan view. If the adhesive region is made up of one or a plurality of regions with an island shape in plan view, the formed amount of the adhesive region can be reduced to improve the battery characteristics of the lithium ion secondary battery, while achieving good adhesion of the separator and electrodes. The presently disclosed inspection method also can determine the formed amount of the adhesive region with sufficiently high accuracy even when the adhesive region is made up of one or a plurality of regions with an island shape in plan view.

The ratio of the adhesive region to the formation surface of the separator substrate (occupied area ratio of the adhesive region) is preferably 5 area% or more, more preferably 10 area% or more, and further preferably 20 area% or more, and preferably 80 area% or less, and more preferably 60 area% or less, with the area of the whole formation surface as 100 area%. If the occupied area ratio of the adhesive region is 5 area% or more, good adhesion of the separator and electrodes can be achieved, while determining the formed amount of the adhesive region with sufficiently high accuracy. On the other hand, if the occupied area ratio of the adhesive region is 80 area% or less, the formed amount of the adhesive region can be reduced to improve the battery characteristics of the lithium ion secondary battery.

In the present disclosure, the occupied area ratio of the adhesive region on the adhesive region formation surface can be calculated from a SEM image of this formation surface.

FIG. 1 is a SEM image of the adhesive region formation surface of the separator substrate. In this adhesive region formation surface, the binder is the particulate binder, and the adhesive region is made up of a plurality of regions with an island shape in plan view, which is an assembly of the particulate binder.

The formed amount of the adhesive region is preferably 0.02 g/m² or more, and more preferably 0.05 g/m² or more, and preferably 0.6 g/m² or less, and more preferably 0.4 g/m² or less. If the formed amount of the adhesive region is within the above range, the formed amount of the adhesive region can be reduced to improve the battery characteristics of the lithium ion secondary battery, while achieving good adhesion of the separator and electrodes. The presently disclosed inspection method also can determine the formed amount of the adhesive region with sufficiently high accuracy even when the formed amount of the adhesive region is within the above range and the mass per unit area is small.

### <Measurement by spectroscopic ellipsometry>

In the presently disclosed method of inspecting a lithium ion secondary battery separator, measurement by spectroscopic ellipsometry, which measures a change in deflection state of reflected light by irradiating the adhesive region formation surface of the separator substrate with linearly polarized light of white light as incident light, is performed.

The incident light used in the measurement by spectroscopic ellipsometry is linearly polarized light where the amplitudes and the phases of a p polarization component and an s polarization component synchronize. If the adhesive region formation surface is irradiated with this linearly polarized light, the amplitudes and the phases of the p polarization component and the s polarization component do not synchronize in the reflected light, thus becoming elliptically polarized light, because the degree of interference and the refractive index of light differ depending on the state of the irradiated part (For example, when an adhesive is an acrylic-based polymer, the refractive index is about 1.6.).

From this change in polarization state (amplitude difference and phase difference), the displacement (thickness) of the irradiated part with respect to the separator substrate surface is derived. In details, the formed amount of the adhesive region can be estimated by a method described in the EXAMPLES section.

The white light is preferably light emitted by a xenon lamp (wavelength within the range of, for example, 185 nm to 2,000 nm) from the perspective of determining the formed amount of the adhesive region with sufficiently high accuracy.

The above measurement by spectroscopic ellipsometry can use a known spectroscopic ellipsometer.

The presently disclosed inspection method that determines the formed amount of the adhesive region by spectroscopic ellipsometry enables the inspection with high accuracy regardless of the type of the binder that forms the adhesive region or the formed amount, unlike the above inspection method by infrared spectroscopy.

In addition, the presently disclosed inspection method enables the inspection, while conveying the lithium ion secondary battery separator because the spectroscopic ellipsometry is employed. For example, in a continuous production process of lithium ion secondary battery separators and/or laminates, the inspection can be performed, while conveying a lithium ion secondary battery separator with a long length, in the longitudinal direction.

### (Method of producing lithium ion secondary battery separator)

The presently disclosed method of producing a lithium ion secondary battery separator includes coating at least one surface of the separator substrate with a coating liquid containing the binder and a solvent (coating step); drying the coating liquid on the coated separator substrate to form the adhesive region (drying step); and determining the formed amount of the adhesive region (inspecting step), and in the inspecting step, the above presently disclosed method of inspecting a lithium ion secondary battery separator is used.

The presently disclosed production method has an advantage to enable adjustment of various production conditions (e.g., solid content concentration and coating conditions of the coating liquid, etc.) based on inspection results to bring the formed amount of the adhesive region closer to a desired amount, because the presently disclosed production method performs the presently disclosed inspection method that undergoes the inspection using spectroscopic ellipsometry.

In addition, the inspection by spectroscopic ellipsometry employed in the presently disclosed production method can be performed while conveying the lithium ion secondary battery separator as describe above, which enables the production of separators in inline production in which the coating step, the drying step, and the inspecting step are performed in one line. In such a series of processes, the inspection results obtained in the inspecting step is immediately fed back to enable prompt adjustments of the above solid content concentration and coating conditions of the coating liquid (change in type of a gravure roll, etc.).

### <Coating liquid>

The coating liquid is a liquid composition obtained by dissolving and/or dispersing the binder in a solvent. The coating liquid may contain components other than the binder and the solvent. Examples of the components other than the binder and the solvent preferably include a dispersing auxiliary agent. The coating liquid containing a dispersing auxiliary agent can uniformly coat the separator substrate surface with this coating liquid at high speed.

As the binder, the binder that forms the adhesive region, which has been described in "Method of inspecting lithium ion secondary battery separator" section, is used.

Examples of the solvent can include, but are not specifically limited to, any of water and organic solvents, as long as the solvent can solve and/or disperse the binder. Examples of the organic solvents include, but are not specifically limited to, cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; nitriles such as acetonitrile and propionitrile; ethers such as tetrahydrofuran and ethylene glycol diethyl ether; and alcohols such as methanol, ethanol, isopropanol, ethylene glycol, and ethylene glycol monomethyl ether. As the solvent, one type alone or two or more types may be used in combination.

Examples of the dispersing auxiliary agent that may be optionally contained in the coating liquid include anionic surfactants such as sodium dodecylbenzenesulfonate and sodium dodecyl sulfate; non-ionic surfactants such as polyoxyethylene nonylphenyl ether and sorbitan monolaurate; and cationic surfactants such as octadecylamine acetate. As the dispersing auxiliary agent, one type alone or two or more types may be used in combination. Of these dispersing auxiliary agents, anionic surfactants are preferable, and sodium dodecylbenzenesulfonate is more preferable.

The content of the dispersing auxiliary agent in the coating liquid is not specifically limited, but from the perspective of more successfully performing uniform and high-speed coating of the coating liquid, the content per 100 parts by mass of the binder is preferably 0.1 parts by mass or more, and more preferably 0.5 parts by mass or more, and preferably 3 parts by mass or less, and more preferably 2 parts by mass or less.

The solid content concentration of the coating liquid is preferably 1 mass% or more, more preferably 2 mass% or more, and more preferably 5 mass% or more, and preferably 40 mass% or less, more preferably 30 mass% or less, and further preferably 20 mass% or less. If the solid content concentration of the coating liquid is 1 mass% or more, drying efficiency in the drying step described below can be ensured. If the solid content concentration of the coating liquid is 40 mass% or less, the viscosity of this coating liquid does not excessively increase, making handling easier.

The method of preparing the coating liquid is not specifically limited, and the coating liquid can be prepared by mixing the binder and the solvent by a known method.

### <Coating step>

In the coating step, one surface or both surfaces of the separator substrate is coated with the above coating liquid. Examples of the method of coating the surface of the separator substrate with the coating liquid can include, but are not specifically limited to, known methods such as an inkjet method, a spraying method, a dispensing method, a gravure coating method, and a screen printing method.

The coating speed of the coating liquid is not specifically limited, but the coating speed can be, for example, within the range of 2 m/min or more and 300 m/min or less. Even if the coating speed is within the above range and high speed, the presently disclosed production method can determine the formed amount of the adhesive region with sufficiently high accuracy, while continuously producing lithium ion secondary battery separators in an efficient way.

### <Drying step>

In the drying step, the coating liquid with which the separator substrate is coated in the coating step is dried to remove the solvent, forming the adhesive region on the separator substrate. The method of drying the coating liquid on the separator substrate is not specifically limited, and a known drying method can be used. When drying is performed by air drying, for example, it is preferable to set the wind speed to 0.1 m/min or more and 3 m/min or less and the drying temperature to 30°C or more and 80°C or less.

### <Inspecting step>

In the inspecting step, the formed amount of the adhesive region formed on the separator substrate in the drying step is determined using the above presently disclosed method of producing a lithium ion secondary battery separator.

The separator obtained by the presently disclosed method of producing a lithium ion secondary battery separator can also be successively adhered to electrodes in an identical line to produce a laminate.

### EXAMPLES

The following provides a more specific description of the present disclosure based on examples. However, the present disclosure is not limited to the following examples. In the following description, "%" and "parts" used in expressing quantities are by mass, unless otherwise specified.

In the examples, the glass-transition temperature of the binder was measured by the following method, and the determination accuracy of the formed amount of the adhesive region was evaluated by the following method.

### <Glass-transition temperature of binder>

Each water dispersion containing the prepared binder is dried at a temperature of 25°C for 48 hours, and the obtained powder was used as a measurement sample.

Then, a differential scanning calorimetry (DSC) curve was obtained by weighing 10 mg of the measurement sample into an aluminum pan and then measuring the measurement sample in a measurement temperature range of - 100°C to 200°C at a heating rate of 20°C/min under conditions stipulated by JIS Z8703 using a differential scanning calorimeter (produced by SII NanoTechnology Inc., product name "EXSTAR DSC6220"). An empty aluminum pan was used as a reference. During this heating process, the temperature where the differential signal (DDSC) indicates the peak was determined as the glass-transition temperature (°C). When a plurality of peaks were measured, the temperature that indicates the peak with the greatest displacement was determined as the glass-transition temperature of the binder.

### <Determination accuracy of formed amount of adhesive region>

The determination accuracy was calculated with a formula: determination accuracy (%) = 100 - |X - Y| / Y × 100, by setting the formed amount of the adhesive region determined by measurement such as spectroscopic ellipsometry (estimated amount) to X g/m² and setting the formed amount of the adhesive region determined by gravimetric measurement after the measurement such as spectroscopic ellipsometry (actual amount) to Y g/m². The obtained determination accuracy was evaluated by the following standard.
A: Determination accuracy of 95% or more and 100% or less
B: Determination accuracy of 90% or more and less than 95%
C: Determination accuracy of 85% or more and less than 90%
D: Determination accuracy of less than 85%

### (Example 1)

### <Preparation of binder and coating liquid>

In forming a core portion, a 5 MPa pressure vessel equipped with a stirrer was charged with 38.5 parts of methyl methacrylate and 28.6 parts of n-butyl acrylate as (meth)acrylic acid alkyl ester monomers, 0.1 parts of allyl methacrylate as a crosslinkable monomer, 2.8 parts of methacrylic acid as an acidic group-containing monomer, 1 part of sodium dodecylbenzenesulfonate as an emulsifier (dispersing auxiliary agent), 150 parts of deionized water, and 0.5 parts of potassium persulfate as a polymerization initiator. These materials were sufficiently stirred and were then heated to 60°C to initiate polymerization. The polymerization was continued until a polymerization conversion rate of 96% was reached to obtain a water dispersion containing a particulate polymer forming the core portion. Next, at the point at which the polymerization conversion rate reached 96%, to form a shell portion, 29.5 parts of styrene as an aromatic monovinyl monomer and 0.5 parts of methacrylic acid as an acidic group-containing monomer were continuously added into the vessel, and the vessel was heated to 70°C to continue the polymerization. The reaction was terminated by cooling at the point at which the polymerization conversion rate reached 96% to obtain a dispersion liquid containing a binder (polymer having a core-shell structure) and sodium dodecylbenzenesulfonate as a dispersing auxiliary agent. The glass-transition temperature of the binder was 45°C.

The deionized water was added to the obtained dispersion liquid to obtain a coating liquid with a solid content concentration of 5%.

### <Preparation of separator substrate>

As the separator substrate, a microporous membrane made of polypropylene (PP) (product name "Celgard 2500") was prepared.

### <Coating step and drying step>

One surface of the above separator substrate was coated with the above coating liquid, while the separator substrate being conveyed. The coating was performed using a gravure coating method with a coating speed of 5 m/min.

The surface coated with the coating liquid was then air-dried (drying temperature: 60°C, wind speed: 1 m/min), while the separator substrate being conveyed, to obtain a separator in which the adhesive region was formed on one surface of the separator substrate. The adhesive region is made of a particulate binder with a mean diameter of 0.5 µm, and the adhesive region was made up of a plurality of regions with an island shape in plan view, which is an assembly of this particulate binder. The occupied area ratio of the adhesive region on the formation surface was 40 area%.

### <Inspecting step>

The following advance preparation was performed, and a formed amount X (g/m²) of the adhesive region was further determined in the following procedure. Then, the evaluation of the above determination accuracy of the formed amount was performed using this formed amount X and a formed amount Y (g/m²) of the adhesive region, which was separately determined by gravimetric measurement. The results are presented in Table 1. The formed amount (Y) of the adhesive region, which was determined by gravimetric measurement, was 0.05 g/m².

### <<Advance preparation>>

(1) Four samples for making a calibration curve, in which the adhesive region with a uniform thickness was formed on one whole surface of the separator substrate, were prepared. For these four samples, the respective formed amounts of the adhesive regions, which were determined by gravimetric measurement, were 0.05 g/m², 0.1 g/m², 0.4 g/m², and 0.6 g/m².
(2) The calibration curve that indicates the relationship between the thickness and the formed amount was obtained by least squares method, by plotting with the thicknesses of the adhesive regions in the obtained four samples for making a calibration curve on the vertical axis and the formed amounts of the adhesive regions, which were determined by gravimetric measurement, on the horizontal axis.

### <<Procedure for determining formed amount X>>

Spectroscopic ellipsometry was performed on the separator obtained through the above coating step and drying step (the adhesive region is formed on one surface of the separator substrate) under the following inspection conditions to determine a mean value H of displacements of the separator surface with respect to the separator substrate surface (i.e., a part on which the adhesive region is formed is the surface of the adhesive region, and a part on which the adhesive region is not formed is the surface of the separator substrate), on the formation surface of the adhesive region. By using this mean value H as the thickness of the calibration curve obtained in "Advance preparation" above (vertical axis), the corresponding formed amount (horizontal axis) was determined and used as the formed amount X.

### - Inspection conditions -

Measurement device: Spectroscopic ellipsometer (produced by Horiba, Ltd., product name "UVISEL Plus")
White light source: Xenon lamp
Change in polarization state to be measured: Amplitude difference and phase difference

### (Examples 2 to 4)

Each binder and each coating liquid were prepared in the same manner as in Example 1 except for that, in the coating step, the position and area of the region to be coated were not changed, the coating amount of the coating liquid was changed, and each formed amount (Y) of the adhesive region, which was determined by gravimetric measurement, was adjusted to 0.1 g/m² (Example 2), 0.4 g/m² (Example 3), or 0.6 g/m² (Example 4), to prepare each separator substrate. Then, the coating step, the drying step, and the inspecting step were performed to perform the evaluation. The results are presented in Table 1.

### (Example 5)

A binder and a coating liquid were prepared in the same manner as in Example 1 except for using a separator substrate including a heat resistance layer prepared as described below. Then, the coating step, the drying step, and the inspecting step were performed to perform the evaluation. The results are presented in Table 1. The surface on the side on which the heat resistance layer of the separator substrate was provided was used as the adhesive region formation surface.

### <Preparation of separator substrate>

### <<Preparation of binder for heat resistance layer>>

A reactor equipped with a stirrer was supplied with 70 parts of deionized water, 0.15 parts of sodium lauryl sulfate (produced by Kao Chemicals, "EMAL 2F") as an emulsifier, and 0.5 parts of ammonium persulfate as a polymerization initiator, the gas phase part was replaced with nitrogen gas, and the reactor was heated to 60°C. On the other hand, 50 parts of deionized water, 0.8 parts of sodium dodecylbenzenesulfonate as an emulsifier, 2 parts of acrylonitrile as a (meth)acrylonitrile monomer, 93.8 parts of butyl acrylate as a (meth)acrylic acid ester monomer, 2 parts of methacrylic acid as an acidic group-containing monomer, 1 part of allylglycidylether and 1.2 parts of N-methylolacrylamide as crosslinkable monomers, and 0.15 parts of sodium ethylenediaminetetraacetate tetrahydrate (produced by CHELEST CORPORATION, "CHELEST 400G") as a chelating agent were mixed in another vessel to obtain a monomer composition. This monomer composition was continuously added into the reactor over four hours to perform polymerization. During the addition, the reaction was performed at 60°C. After the end of the addition, stirring was further performed for three hours at 70 °C, and the reaction was then terminated to prepare a water dispersion of a binder for heat resistance layer (acrylic-based polymer).

In the present disclosure, "(meth)acrylo" indicates acrylo and/or methacrylo.

### <<Formation of heat resistance layer>>

100 parts of alumina as non-conductive particles and 13.3 parts of water dispersion of the above binder for heat resistance layer (6 parts of binder for heat resistance layer) were mixed to obtain a composition for heat resistance layer.

The composition for heat resistance layer was applied to the one whole surface of a microporous membrane made of polypropylene (PP) (product name "Celgard 2500") to be dried for three minutes at 50°C. This obtained a separator substrate in which a heat resistance layer was provided on one surface of the microporous membrane.

### (Examples 6 to 8)

Each binder and each coating liquid were prepared in the same manner as in Example 5 except for that, in the coating step, the area of the region to be coated was not changed, the coating amount of the coating liquid was changed, and each formed amount (Y) of the adhesive region, which was determined by gravimetric measurement, was adjusted to 0.1 g/m² (Example 6), 0.4 g/m² (Example 7), or 0.6 g/m² (Example 8), to prepare each separator substrate. Then, the coating step, the drying step, and the inspecting step were performed to perform the evaluation. The results are presented in Table 1.

### (Examples 9 to 12)

Each binder and each coating liquid were prepared in the same manner as in Example 1 except for that, in preparing the binder, the amount of potassium persulfate as a polymerization initiator was changed, and each mean diameter of the particulate binder that forms the adhesive region was set to 0.1 µm, 1 µm, 2 µm, or 5 µm, to prepare each separator substrate. Then, the coating step, the drying step, and the inspecting step were performed to perform the evaluation. The results are presented in Table 1.

### (Examples 13 to 16)

Each binder and each coating liquid were prepared in the same manner as in Example 1 except for that, in the coating step, the coating amount of the coating liquid was not changed, the area of the region to be coated was changed, and each occupied area ratio of the adhesive region on the formation surface was adjusted to 10 area%, 20 area%, 60 area%, or 100 area%, to prepare each separator substrate. Then, the coating step, the drying step, and the inspecting step were performed to perform the evaluation. The results are presented in Table 1.

### (Comparative Examples 1 and 2)

Each binder and each coating liquid were prepared in the same manner as in Example 1 or 2 except for that the formed amount X (g/m²) of the adhesive region was determined by performing an inspecting step as described below (infrared spectroscopy) instead of the inspecting step using spectroscopic ellipsometry, to prepare each separator substrate. Then, the coating step and the drying step were performed to perform the evaluation. The results are presented in Table 1.

### <Inspecting step>

The following advance preparation was performed, and a formed amount X (g/m²) of the adhesive region was further determined in the following procedure. Then, the evaluation of the above determination accuracy of the formed amount was performed using this formed amount X and a formed amount Y (g/m²) of the adhesive region, which was separately determined by gravimetric measurement. The results are presented in Table 1. Each formed amount (Y) of the adhesive region, which was determined by gravimetric measurement, was 0.05 g/m² (Comparative Example 1) or 0.1 g/m² (Comparative Example 2).

### <<Advance preparation>>

(1) Four samples for making a calibration curve, in which the adhesive region with a uniform thickness was formed on one whole surface of the separator substrate, were prepared. For these four samples, the respective formed amounts of the adhesive regions, which were determined by gravimetric measurement, were 0.05 g/m², 0.1 g/m², 0.4 g/m², and 0.6 g/m².
(2) For the obtained four samples for making a calibration curve, the calibration curve that indicates the relationship between the absorption peak of carbonyl groups and the formed amount was obtained by least squares method, by plotting with the absorption peaks of carbonyl groups using an intermediate-infrared film thickness meter (produced by KURABO, product name "RX-410") on the vertical axis and the formed amounts of the adhesive regions, which were determined by gravimetric measurement, on the horizontal axis.

### <<Procedure for determining formed amount X>>

For each separator (the adhesive region is formed on one surface of the separator substrate) in Comparative Example 1 or 2 obtained through the coating step and the drying step in the same manner as in Example 1 or 2, the absorption peak P of carbonyl groups was determined using the above intermediate-infrared film thickness meter. By using this P value as the absorption peak of the calibration curve obtained in "Advance preparation" above (vertical axis), the corresponding formed amount (horizontal axis) was determined and used as the formed amount X.

### (Comparative Examples 3 to 6)

Each binder and each coating liquid were prepared in the same manner as in each of Examples 1 to 4 except for that the formed amount X (g/m²) of the adhesive region was determined by performing an inspecting step as described below (optical interferometry) instead of the inspecting step using spectroscopic ellipsometry, to prepare each separator substrate. Then, the coating step and the drying step were performed to perform the evaluation. The results are presented in Table 1. Each formed amount (Y) of the adhesive region, which was determined by gravimetric measurement, was 0.05 g/m² (Comparative Example 3), 0.1 g/m² (Comparative Example 4), 0.4 g/m² (Comparative Example 5), or 0.6 g/m² (Comparative Example 6).

### <Inspecting step>

For each separator (the adhesive region is formed on one surface of the separator substrate) in each of Comparative Examples 3 to 6 obtained through the coating step and the drying step in the same manner as in each of Examples 1 to 4, a mean thickness T of the adhesive region was measured using an optical interferometry film thickness meter (produced by FILMETRICS, product name "F20 film thickness measurement system", measurement wavelength range: 190 to 1100 nm). By using this mean thickness T as the thickness of the calibration curve obtained in the same manner as in each of Examples 1 to 4 (vertical axis), the corresponding formed amount (horizontal axis) was determined and used as the formed amount X.

**[Table 1]**

| | Inspection method | Separator substrate | Adhesive region | | | Determining accuracy |
|---|---|---|---|---|---|---|
| | | Type | Mean diameter [µm] | Occupied area ratio [area%] | Formed amount (Y) [g/m²] | |
| Example 1 | Spectroscopic ellipsometry | Polypropylene | 0.5 | 40 | 0.05 | A |
| Example 2 | | | | | 0.1 | A |
| Example 3 | | | | | 0.4 | A |
| Example 4 | | | | | 0.6 | A |
| Example 5 | | Polypropylene + Heat resistance layer | | | 0.05 | A |
| Example 6 | | | | | 0.1 | A |
| Example 7 | | | | | 0.4 | A |
| Example 8 | | | | | 0.6 | A |
| Example 9 | | Polypropylene | 0.1 | | 0.05 | B |
| Example 10 | | | 1 | | | A |
| Example 11 | | | 2 | | | A |
| Example 12 | | | 5 | | | A |
| Example 13 | | | 0.5 | 10 | | B |
| Example 14 | | | | 20 | | A |
| Example 15 | | | | 60 | | A |
| Example 16 | | | | 100 | | A |
| Comparative Example 1 | Infrared spectroscopy | | | 40 | 0.05 | D |
| Comparative Example 2 | | | | | 0.1 | C |
| Comparative Example 3 | Optical interferometry | | | | 0.05 | D |
| Comparative Example 4 | | | | | 0.1 | D |
| Comparative Example 5 | | | | | 0.4 | D |
| Comparative Example 6 | | | | | 0.6 | D |

From Table 1, it is found that, in Examples 1 to 16 in which the inspection by spectroscopic ellipsometry was performed, the formed amount of the adhesive region on the separator substrate can be determined with high accuracy. On the other hand, it is found that, in Comparative Examples 1 and 2 in which the inspection by infrared spectroscopy was performed and in Comparative Examples 3 to 6 in which the inspection by optical interferometry was performed, the formed amount of the adhesive region on the separator substrate cannot be determine with high accuracy.

### INDUSTRIAL APPLICABILITY

According to the present disclosure, it is possible to provide an inspection method that can determine the formed amount of an adhesive region on a separator substrate with high accuracy in producing a lithium ion secondary battery separator and a method of producing the lithium ion secondary battery separator using this inspection method.

## Claims

1. A method of inspecting a lithium ion secondary battery separator, in which an adhesive region made of a binder is formed on at least one surface of a separator substrate, the method comprising
determining a formed amount of the adhesive region by spectroscopic ellipsometry that measures a change in deflection state of reflected light by irradiating the surface of the separator substrate on which the adhesive region is formed with linearly polarized light of white light as incident light.

2. The method of inspecting a lithium ion secondary battery separator according to claim 1, wherein the adhesive region is made of a particulate binder with a mean diameter of 0.1 µm or more and 5 µm or less.

3. The method of inspecting a lithium ion secondary battery separator according to claim 1 or 2, wherein the adhesive region is made up of one or a plurality of regions with an island shape in plan view.

4. The method of inspecting a lithium ion secondary battery separator according to any one of claims 1 to 3, wherein the adhesive region has a formed amount of 0.02 g/m² or more and 0.6 g/m² or less.

5. The method of inspecting a lithium ion secondary battery separator according to any one of claims 1 to 4, wherein the white light is light emitted by a xenon lamp.

6. The method of inspecting a lithium ion secondary battery separator according to any one of claims 1 to 5, comprising performing measurement by the spectroscopic ellipsometry, while conveying the lithium ion secondary battery separator with a long length, in the longitudinal direction.

7. A method of producing a lithium ion secondary battery separator, comprising:
coating at least one surface of the separator substrate with a coating liquid containing the binder and a solvent;
drying the coating liquid on the coated separator substrate to form the adhesive region; and
determining a formed amount of the adhesive region using the method of inspecting a lithium ion secondary battery separator according to any one of claims 1 to 6.

8. The method of producing a lithium ion secondary battery separator according to claim 7, wherein the coating liquid further contains a dispersing auxiliary agent.

9. The method of producing a lithium ion secondary battery separator according to claim 7 or 8, wherein the coating liquid has a solid content concentration of 1 mass% or more and 40 mass% or less.

10. The method of producing a lithium ion secondary battery separator according to any one of claims 7 to 9, wherein the coating liquid has a coating speed of 2 m/min or more and 300 m/min or less.
